# EUROPEAN PATENT APPLICATION

(11) **EP 4 203 123 A1**
(43) Date of publication of application: **28.06.2023**
(21) Application number: 22152852.4
(22) Date of filing: 24.01.2022
(51) Int. Cl.: H01M 10/04, H01M 10/52, H01M 50/308, H01M 50/317, H01M 10/44

(54) **DEGASSING DEVICE FOR BATTERY CELL**

(30) Priority: 24.12.2021 KR 20210186984
(71) Applicant: TM Plaza Co., Ltd., Ulsan 44956 (KR)
(72) Inventor: JUNG, Yong Gyu, 44654 Ulsan (KR)
(74) Representative: M. Zardi & Co S.A.

(57) **Abstract**

The present invention discloses a degassing device for battery cell to remove gas generated inside the battery cell, the degassing device comprises: a frame body including a driving shaft moving straight, and fixed shafts fixed on the driving shaft; a module fixed member including a module actuator body combined with the driving shaft and a module fixed body fixed to the fixed shafts to guide the driving shaft to move straight; a first actuator module mounted on the module actuator body, and a second actuator module mounted on the module fixed body to face the first actuator module, wherein the first and second actuator module are a pair facing each other and enables the battery cell to discharge gas and the perforated portion to be sealed, wherein and a plurality of the pairs are installed on the driving shaft and the fixed shafts.

## Description

### FIELD OF THE INVENTION

The present invention relates to a degassing device for battery cell, and more particularly, to a degassing device for battery cell that has a simple structure capable of efficiently removing gas generated during the activation stage in the process of manufacturing battery cell.

### BACKGROUND OF THE INVENTION

In general, a battery is a device that supplies power to operate machine. Recently, as portable electronic devices such as laptops and smart phones become common and electric automobiles are commercialized, the demand for battery is rapidly increasing.

In addition, since battery can be charged up and used again after discharged, battery is encouraged to use in various electronics.

Typically, battery is composed of a plurality of battery cells.

A battery cell is a basic unit of a battery, and includes a battery case, a positive electrode plate, a negative electrode plate, a separator plate, and an electrolyte that are accommodated in the battery case.

The patent documents below suggest examples of a method for manufacturing a battery cell and the battery cell manufactured thereby.

When a battery cell is manufactured, a battery cell is activated by charging up through connection between the battery cell and a charging device.

While the battery cell is being charged for activation of the battery cell, ions in the negative plate move to the positive plate through the separator inside of the battery cell, and at the same time, gas is generated inside the battery cell.

Since the conventional methods for manufacturing battery cell do not have a device capable of removing gas generated inside battery cell, the subsequent steps for manufacturing battery cell are performed in a state in which the battery case is slightly inflated due to gas. Accordingly, technical problems such as deformation of the external shape of the battery case or disconnection between the electrode plate and the battery case, which deteriorate the quality of battery cell, frequently occur. Therefore, solutions for the problems are urgently required.

### Prior Art

(Patent Document 0001) Korean Patent Publication No. 10-2015-0089164 (2015.08.05)
(Patent Document 0002) Korean Patent Registration No. 10-1499471 (2015.03.02)

### Technical Problem

The present invention has been devised to solve the above problems, and an object of the present invention is to provide a degassing device for battery cell that has a simple structure capable of efficiently removing gas generated during the activation stage in the process of manufacturing battery cell.

Another object of the present invention is to provide a degassing device for battery cell that can easily operate in removing gas generated inside battery cell, and allowing smooth operation of perforation and heat sealing.

Another object of the present invention is to provide a degassing device for battery cell that can improves reliability and durability of the degassing device by securing durability of a vacuum pad, which seals the perforated area for gas suction.

Another object of the present invention is to provide a degassing device for battery cell that can be formed by a simple structure comprising a frame body, a first actuator module, and a second actuator module, which can efficiently remove gas generated during the activation stage in the process of manufacturing battery cell to improve the quality of battery cell.

### SUMMARY OF THE INVENTION

A degassing device for battery cell to remove gas generated inside the battery cell during charging up the battery cell through connection between the battery cell and a charging system to activate the battery cell, the degassing device comprises:
a frame body including a driving shaft installed on a center of one side thereof to move straight, and fixed shafts each of which is respectively arranged and fixed in a left side and a right side of the driving shaft; a module fixed member including a module actuator body installed to be combined with the driving shaft through a rack gear and a module fixed body installed in such a way that a top side thereof is fixed to the fixed shafts to guide the driving shaft to move straight; a first actuator module mounted on and moving together with the module actuator body and enabling the battery cell to discharge gas and the perforated portion to be sealed, and a second actuator module mounted on the module fixed body to face the first actuator module and enabling the battery cell to discharge gas and the perforated portion to be sealed, wherein the first actuator module and the second actuator module are a pair of gas removal means that face each other, wherein the pair of the first actuator module and the second actuator module are plural, and a plurality of the pairs of the first actuator module and the second actuator module are installed on the driving shaft and the fixed shaft.

A rack gear may be formed to face an internal side of the drive shaft and a top side of the module fixed member, respectively, and the first actuator module moves forward toward or backward from the second actuator module by the driving shaft that moves straight.

Each of the first actuator module and the second actuator module may include: a housing body having a box shape and including a central through hole penetrating through a center of a front of the housing body and auxiliary through holes penetrating through the front around a left portion and a right portion of the central through hole; a blade perforation body installed at a center of the central through hole to perforate the battery cell; a heating block installed on an internal edge of the front of the housing body to heat and seal a perforated portion of the battery cell, which is penetrated by the blade perforation body; a main vacuum pad mounted on the front of the central through hole and formed to spread widely and attach to the battery cell when the battery cell is pressed; sub-vacuum pads respectively mounted on the front of the auxiliary through holes, and formed to spread widely and support the battery cell when each of the first actuator module and the second actuator module is attached to or detached from the battery cell; a main gas suction unit provided at a rear of the central through hole to suck gas, and a side suction unit provided on a left portion and a right portion of the main gas suction unit at a rear of the auxiliary through holes to suck gas.

The heating block of the first actuator module may be formed to have a concave groove at a corner of a square edge of the first actuator module, and the heating block of the second actuator module is formed to have a protrusion at a corner of a square edge of the second actuator module, wherein when the first actuator module is in contact with the second actuator module, the protrusion is inserted to the concave groove to fix and maintain contact limit between the first actuator module and the second actuator module.

In a state that the battery cell is positioned between the first actuator module and the second actuator module, and the first actuator module is moved to face the second actuator module by an operation of the driving shaft, when the heating block of the first actuator module and the heating block of the second actuator module respectively heat a front surface and a rear surface of the battery cell, the battery cell may be heat-sealed by heat of each of the heating block, and the perforated portion of the battery cell is heat-sealed.

### Advantageous Effects

The present invention provides a degassing device for battery cell that can efficiently remove gas generated during the activation stage in the process of manufacturing battery cell.

In addition, the present invention provides a degassing device for battery cell that can easily operate in removing gas generated inside battery cell, and allow smooth operation of perforation and heat sealing.

Furthermore, the present invention provides a degassing device for battery cell that can improves reliability and durability of the degassing device by securing durability of a vacuum pad, which seals the perforated area for gas suction.

Moreover, the present invention provides a degassing device for battery cell that can be formed by a simple structure comprising a frame body, a first actuator module, and a second actuator module, which can efficiently remove gas generated during the activation stage in the process of manufacturing battery cell to improve the quality of battery cell.

### BRIEF DESCRIPTION OF THE DRAWINGS

Figs. 1 to 9 are embodiments illustrating a degassing device for battery cell according to the present invention.
Fig. 1 is an overall perspective view of a degassing device for battery cell according to an embodiment of the present invention.
Fig. 2 is a front view and a top view of the degassing device for battery cell of Fig. 1
Fig. 3 is a cross sectional view of the front view of Fig. 2.
Fig. 4 is a magnified view of an important part of a degassing device for battery cell according to an embodiment of the present invention.
Fig. 5 is a cross sectional view of an important part including a pair of a first actuator module and a second actuator module of a degassing device for battery cell according to an embodiment of the present invention.
Fig. 6 is a perspective view of a first actuator module or a second actuator module of a pair of a degassing device for battery cell according to an embodiment of the present invention.
Fig. 7 is a front view, a rear view, a left view, a right view, a top view, and a bottom view of Fig. 6.
Fig. 8 is an internal structure of the rear view of Fig. 6.
Fig. 9 is an operation process of a degassing device for battery cell according to an embodiment of the present invention.

### DETAILED DESCIPTION EMBODIEMENTS OF THE INVENTIONS

The present invention will be described in detail with reference to the accompanying drawings illustrating specific embodiments. However, the present invention is not limited to the specific embodiment described below. The present invention may include various embodiments formed by applying various changes to the specific embodiments, and it should be understood to include all modifications, equivalents, and substitutes included in the spirit and scope of the present invention.

The present invention is not limited to the embodiments disclosed below and may be implemented in various different forms. This embodiment is provided to complete the disclosure of the present invention and to fully inform one of ordinary skill in the art.

Hereinafter, preferred embodiments of the present invention will be described in detail with reference to the accompanying drawings. In adding reference numbers to components in each drawing, the same component has the same reference number as much as possible even if they are appeared on different drawings. In addition, in the description of the present invention, if the detailed description of related known functions or configurations may unnecessarily obscure the gist of the present invention, the detailed description thereof will be omitted.

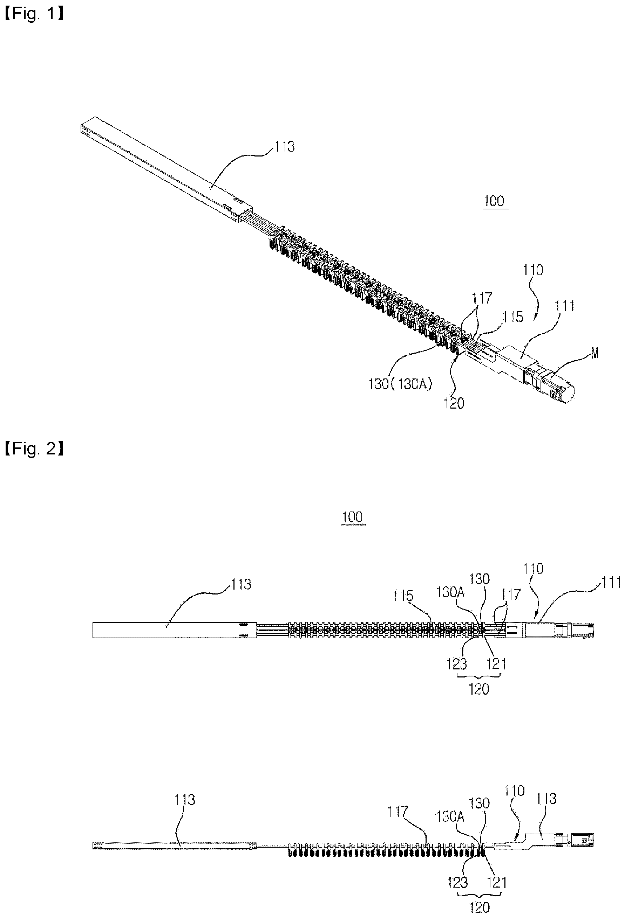

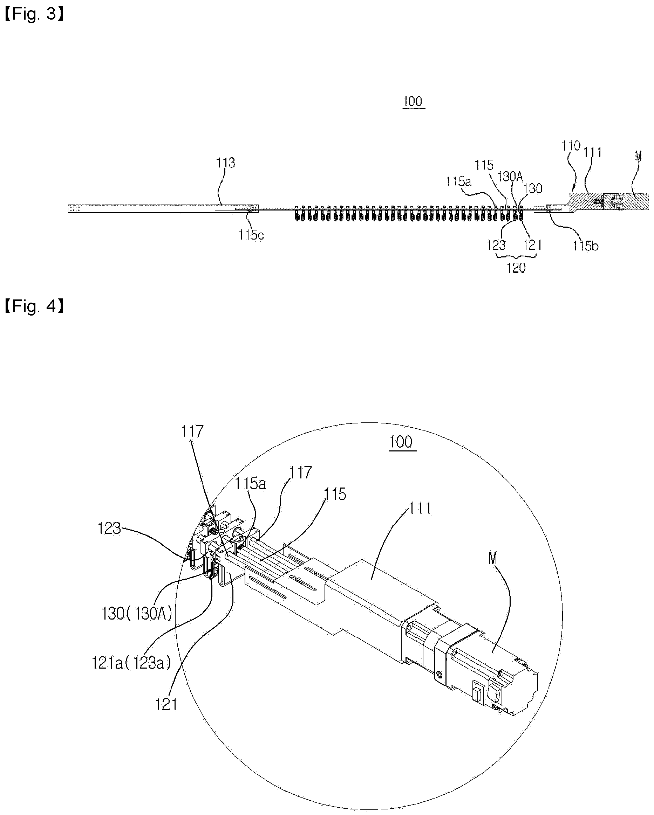

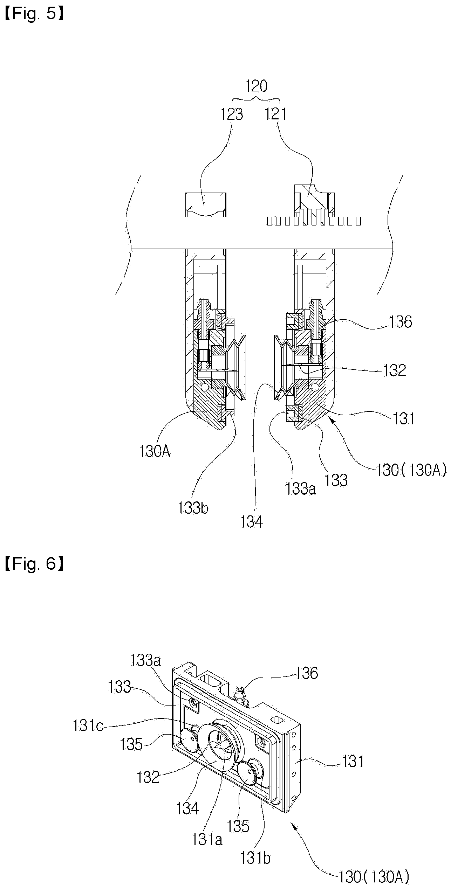

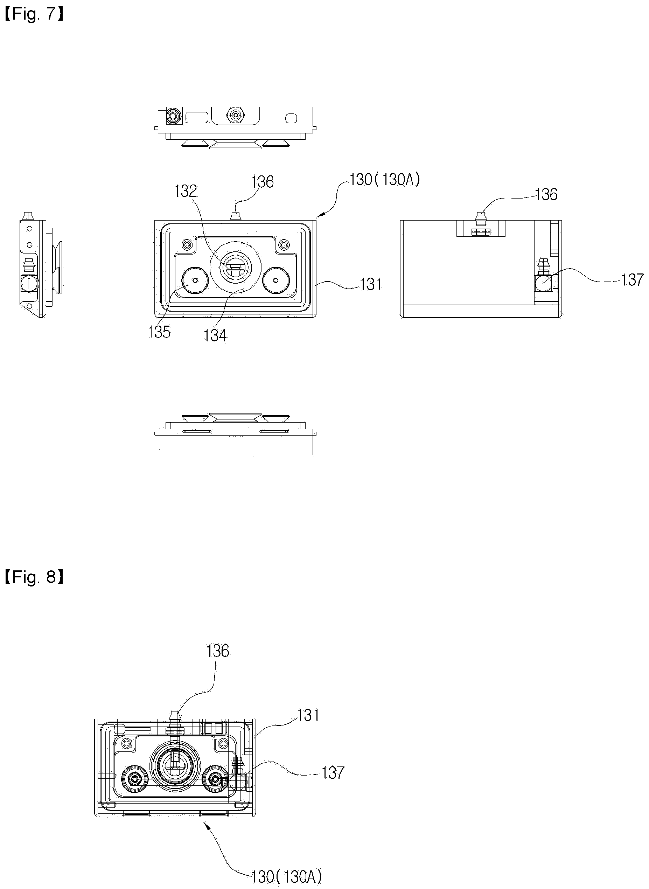

Figs. 1 to 9 are embodiments illustrating a degassing device 100 for battery cell according to the present invention.

Referring to Figs. 1 to 8, a degassing device 100 for battery cell according to the present invention is to remove gas generated inside battery cell, while charging up the battery cell through connection between the battery cell and a charging system to activate the battery cell. The degassing device 100 comprises: a frame body 110; a module fixed member 120; a first actuator module 130; and a second actuator module 130A.

The first actuator module 130 and the second actuator module 130A are a pair of gas removal means that enables gas to be discharged from the battery cell and heat-seals the battery cell. The first actuator module 130 and the second actuator module 130A are respectively arranged in a left side and right side to face each other. In this case, a plurality of a pair of the first actuator modules 130 and the second actuator modules 130A may be installed on a driving shaft 115 and a fixed shaft 117.

The frame body 110 is a frame of the degassing device 100 used for manufacturing the battery cell. The frame body 110 may include: a main assembly 111 having a driving actuator M installed on one side thereof; a sub-assembly 113 provided to be spaced apart from the main assembly 111 on the other side thereof; the driving shaft 115 installed to move straight across the main assembly 111 and the sub-assembly 113, and the fixed shaft 117 provided as a pair, each of which is respectively arranged in a left side and a right side of the driving shaft 115 across the main assembly 111 and the sub-assembly 113.

The main assembly 111 and the sub-assembly 113 are formed as spaces in which components are installed. The main assembly 111 contains a general connection structure between a motor and an actuator therein. Detailed descriptions for the connection structure are omitted below.

A rack gear 115a is formed on the internal side of the drive shaft 115 along its longitudinal direction, and each end of the drive shaft 115 is rotatably connected to each of the internal side of the main assembly 111 and the sub-assembly 113 through connecting gears 115b.

The rack gear 115a of the drive shaft 115 is engaged with the top side of a single body of the module fixed member 120 to operate the driving shaft 115 to move straight and can be operated to enable the plurality of the module fixed member 120 to move forward or backward.

The module fixed member 120 is installed so that one single body of a plurality of single bodies, which are respectively through-connected to the driving shaft 115 and the fixed shaft 117, can move forward and backward along the driving shaft 115. Specifically, the module fixed member 120 may be configured to include a module actuator body 121 installed in such a way that a top side thereof is combined with the driving shaft 115 through the rack gear 115a to move the driving shaft 115 straight and a module fixed body 123 installed in such a way that a top side thereof is fixed to the fixed shafts 117 to guide the driving shaft 115 to move straight.

In addition, a bottom side of each of the module actuator body 121 and the module fixed body 123 is opened, and has a bottom accommodating part 121a, 123a to accommodate and assembled with the first actuator module 130 and the second actuator module 130A, respectively. In this case, the first and second actuator modules 130, 130A may be fixedly installed in the bottom accommodating part 121a, 123a of the module actuator body 121 and the module fixed body 123 through assembling such as bolting.

The first actuator module 130 and the second actuator module 130A may be a pair of gas removal means that are respectively arranged in a left side and right side to face each other and to be installed on the internal side of the module fixed member 120 to enable the battery cell to discharge gas and the perforated portion to be sealed.

The first actuator module 130 may be configured to include: a housing body 131 having a box shape and including a central through hole 131a penetrating through the center of the front of the first actuator module 130 and auxiliary through holes 131b, 131c penetrating through the front around the left portion and right portion of the central through hole 131a; a blade perforation body 132 installed at the center of the central through hole 131a to perforate the battery cell; a heating block 133 installed on the internal edge of the front of the housing body 131 to heat and heat-seal the perforated portion of the battery cell penetrated by the blade perforation body 132; a main vacuum pad 134 mounted on the front of the central through hole 131a and formed to spread widely and attach to the battery cell when the battery cell is pressed; a sub-vacuum pad 135 mounted on the front of the auxiliary through holes 131b, 131c, respectively, and formed to spread widely and support the battery cell when the first actuator module 130 is attached to or detached from the battery cell; a main gas suction unit 136 provided at the rear of the central through hole 131a to suck gas, and a side suction unit 137 provided on the left portion and the right portion of the main gas suction unit 136 at the rear of the auxiliary through holes 131b, 131c to suck gas.

Meanwhile, the second actuator module 130A is the same structure as the first actuator module 130, and the detailed description of the structure of the second actuator module 130A is omitted.

The housing body 131 serves as a case in which components mentioned above are mounted, and a channel for discharging gas may be formed inside the rear of the housing body 131.

The blade perforation body 132 of the first actuator module 130 and the blade perforation body 132 of the second actuator module 130A are arranged to be displaced from each other to prevent collision between the blade perforation body 132 of the first actuator module 130 and the blade perforation body 132 of the second actuator module 130A when each of the first actuator module 130 and the second actuator module 130A attaches to the battery cell. This structure enables the battery cell to be perforated on both sides, thereby inducing rapid gas discharge.

The heating block 133 seals the battery cell with heat fusion by heating a portion spaced apart from the perforation of the battery cell in the outward direction. The perforation mentioned above is a hole formed in the battery cell by the blade perforation body 132.

Preferably, the heating block 133 is positioned on the outer edge portion of the main vacuum pad 134 and the sub vacuum pad 135 of the first actuator module 130 and the second actuator module 130A, and is formed in an annular shape so that a portion spaced apart from the perforation of the battery cell is heated in an annular shape. In this case, a ceramic heater, or the like, which has a relatively short heating time, may be used.

In addition, each heating block 133 may be connected to a temperature sensor (not shown).

The heating blocks 133 of the first actuator module 130 and the second actuator module 130A may closely face to each other to heat the front and the rear surfaces of the battery cell in an annular shape.

Specifically, the battery cell is positioned between the first actuator module 130 and the second actuator module 130A, and the first actuator module 130 moves to face the second actuator module 130A by the operation of the driving shaft 115. When the heating block 133 of the first actuator module 130 and the heating block 133 of the second actuator module 130A respectively heat the front and rear surface of the battery cell, the battery cell is heat-sealed by the heat of each heating block 133, and thus the perforated portion of the battery cell can be heat-sealed.

In addition, the heating block 133 of the first actuator module 130 may be formed to have a concave groove 133a at the corner of the square edge of the first actuator module 130, and the heating block 133 of the second actuator module 130A may be formed to have a protrusion 133b at the corner of the square edge of the second actuator module 130A.

Preferably, when the first actuator module 130 moves forward toward the second actuator module 130A, the protrusion 133b is inserted and coupled to the concave groove 133a. This structure is to induce secure fixation and maintain contact limit of the second actuator module 130A to the first actuator module 130.

The main vacuum pad 134 and the sub vacuum pad 135 are both made of a soft rubber or silicone material to spread widely when attached to or separated from the battery cell.

Specifically, when the battery cell is folded, perforation may be formed in different positions for each battery cell. In addition, according to the folded shape of the battery cell, multiple perforations may be formed. In this case, when the vacuum pad 134, 135 presses the peripheral portion of the battery cell where the perforation is formed, the peripheral portion becomes relatively flat, and accordingly, the perforation is induced to be formed at a predetermined position of the battery cell.

Meanwhile, the main gas suction unit 136 communicates with a nozzle (not shown) connected to the rear of the main vacuum pad 134 and forms negative pressure so that gas generated inside the battery cell is discharged to the outside through the nozzle simultaneously with perforation. The main gas suction unit 136 is connected to a negative pressure generating pump (not shown) disposed in an outside space, to form a negative pressure in the nozzle, thereby discharging the gas generated inside the battery cell to the outside. In this case, the internal pressure of the battery cell may be in a vacuum state or may be maintained at a preset pressure, according to the degree of negative pressure controlled by the negative pressure forming pump.

That is, in a state where the battery cell is positioned between the first actuator module 130 and the second actuator module 130A, as the first actuator module 130 moves forward, the battery cell is punctured by the first and second actuator module 130, 130A. Specifically, in a state where the first actuator module 130 is positioned close to the second actuator module 130A, but is spaced apart from the battery cell, perforation is formed in the battery cell by each blade perforation body 132 according to the coupling operation of the first actuator module 130 to the second actuator module 130A. At this time, the first actuator module 130 and the second actuator module 130A discharge gas inside the battery cell to the outside through the perforation by using the main gas suction unit 136 simultaneously with perforation. When the gas is discharged from the battery cell until it meets the preset standard, the first actuator module 130 further moves toward the front of the second actuator module 130A so that the first actuator module 130, the battery cell, and the second actuator module 130A are in close contact with each other. With this structure, the battery cell is heated by the heating block 133 of the first actuator module 130 and the second actuator module 130A. Accordingly, the outer portion of the perforation of the battery cell is heat-sealed by the heating of the heating block 133, and the battery cell is sealed. As a result, the battery cell in which gas is removed can be manufactured.

Preferably, a pair of the first actuator module 130 and the second actuator module 130A may be arranged to face each other so that one first actuator module 130 moves straight to be closely attached to one second actuator module 130A. The pair of the first actuator module 130 and the second actuator module 130A may be respectively mounted on a pair of the module actuator body 121 and the module fixed body 123 of the module fixed member 120 to form a group. In this case, the group may be plural, and the plurality of the groups may be installed on the driving shaft 115 and the fixed shaft 117 to be spaced apart from each other by a predetermined distance.

Accordingly, by removing gas from a plurality of battery cells at a time, the degassing operation time for the battery cells can be shortened.

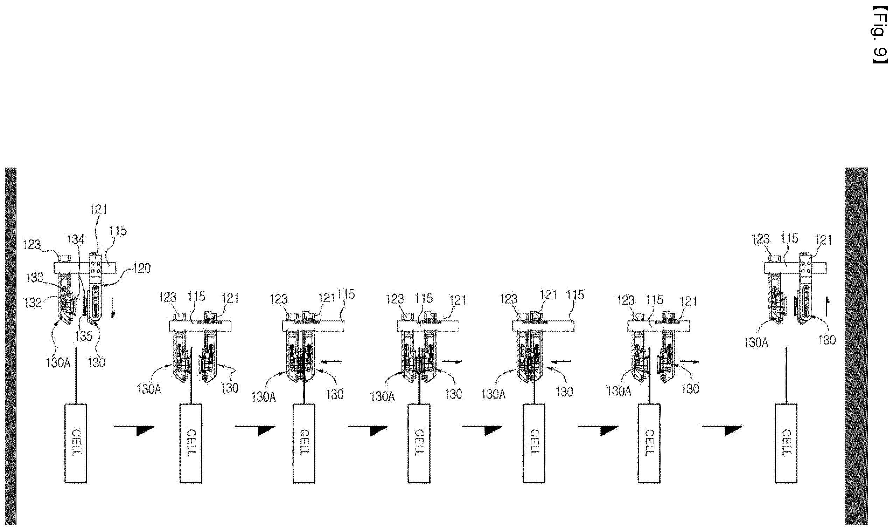

Hereinafter, referring to Fig. 9, the operation and effect of the degassing device 100 for battery cell according to the present invention will be described. The following description is based on the structure described above.

First, as a standby stage, the frame body 110 on which the first actuator module 130 and the second actuator module 130A are mounted, is lowered toward the top side of the target battery cell, so that the target battery cell is positioned in the vicinity of the second actuator module 130A,

Next, in the state in which the target battery cell is in close contact with the second actuator module 130A, the first actuator module 130 moves forward by the forward operation of the module actuator body 121 of the module fixed member 120 coupled to the drive shaft 115. In this case, the first actuator module 130 moves forward together with the module actuator body 121. As the first actuator module 130 is completely in close contact with the second actuator module 130A and the battery cell, each blade perforation body 132 installed on the first actuator module 130 and the second actuator module 130A forms perforations in the target battery cell.

Then, in a state in which the second actuator module 130A, the battery cell, and the first actuator module 130 are in close contact with each other, the first actuator module 130 is slightly retreated backward, and simultaneously with the backward operation, the main gas suction unit 136 sucks gas inside the target battery cell and discharges it to the outside.

Next, the first actuator module 130 moves forward again toward the perforated portion of the target battery cell, and simultaneously with the forward operation, the perforation is heat-sealed by the heating operation of the heating block 133.

Finally, after the first actuator module 130 retreats backward by driving the motor and stops at the initial position in the standby stage, the frame body 110 is raised to be separated from the target battery cell and complete the process of degassing and sealing of the battery cells.

In this case, the main vacuum pad 134 in the first and second actuator module 130, 130A fixes the position of the battery cell, prevents gas leakage from the perforation to the outside, and facilitate gas suction into the main gas suction unit 136. The sub vacuum pad 135 pulls and fixes the battery cell at the left portion and the right portion of the main vacuum pad 134 to additionally prevent gas leakage.

As described above, the degassing device 100 for battery cell according to the present invention enables a series of automated operations including perforation of the battery cell, discharge of gas inside the battery cell, and heat sealing of the perforated area of the battery cell, by operating the first actuator module 130 mounted on the module actuator body 121 of the module fixed member 120 connected to the drive shaft 115 to move forward toward and backward from the second actuator module 130A mounted on the module fixed body 123. In addition, the degassing device 100 enables degassing of multiple battery cells at once in one manufacturing line.

In other words, according to the present invention, with a simple structure comprising a frame body 110, a module fixed member 120, and first and second actuator module 130, 130A, the degassing device 100 can efficiently remove gas generated during the activation stage in the process of manufacturing battery cell and improve the quality of the battery cell through the automated operation.

As described above, the present invention has been illustrated and described with reference to preferred embodiments but is not limited thereto. Various modifications and variations are possible by one of ordinary skill in the art to which the invention pertains within the technical spirit of the present invention and equivalents of the appended claims.

## Claims

1. A degassing device for battery cell to remove gas generated inside the battery cell during charging up the battery cell through connection between the battery cell and a charging system to activate the battery cell, the degassing device comprises:
a frame body including a driving shaft installed on a center of one side thereof to move straight, and fixed shafts each of which is respectively arranged and fixed in a left side and a right side of the driving shaft;
a module fixed member including a module actuator body installed to be combined with the driving shaft through a rack gear and a module fixed body installed in such a way that a top side thereof is fixed to the fixed shafts to guide the driving shaft to move straight;
a first actuator module mounted on and moving straight together with the module actuator body, and enabling the battery cell to discharge gas and the perforated portion to be sealed, and
a second actuator module mounted on the module fixed body to face the first actuator module and enabling the battery cell to discharge gas and the perforated portion to be sealed,
wherein the first actuator module and the second actuator module are a pair of gas removal means that face each other,
wherein the pair of the first actuator module and the second actuator module are plural, and a plurality of the pairs of the first actuator module and the second actuator module are installed on the driving shaft and the fixed shaft.

2. The degassing device of claim 1, wherein a rack gear is formed to face an internal side of the drive shaft and a top side of the module fixed member, respectively, and the first actuator module moves forward toward or backward from the second actuator module by the driving shaft that moves straight.

3. The degassing device of claim 1, wherein each of the first actuator module and the second actuator module includes: a housing body having a box shape and including a central through hole penetrating through a center of a front of the housing body and auxiliary through holes penetrating through the front around a left portion and a right portion of the central through hole;
a blade perforation body installed at a center of the central through hole to perforate the battery cell;
a heating block installed on an internal edge of the front of the housing body to heat and seal a perforated portion of the battery cell, which is penetrated by the blade perforation body;
a main vacuum pad mounted on the front of the central through hole and formed to spread widely and attach to the battery cell when the battery cell is pressed;
sub-vacuum pads respectively mounted on the front of the auxiliary through holes, and formed to spread widely and support the battery cell when each of the first actuator module and the second actuator module is attached to or detached from the battery cell;
a main gas suction unit provided at a rear of the central through hole to suck gas, and
a side suction unit provided on a left portion and a right portion of the main gas suction unit at a rear of the auxiliary through holes to suck gas.

4. The degassing device of claim 3, wherein the heating block of the first actuator module is formed to have a concave groove at a corner of a square edge of the first actuator module, and the heating block of the second actuator module is formed to have a protrusion at a corner of a square edge of the second actuator module,
wherein when the first actuator module is in contact with the second actuator module, the protrusion is inserted to the concave groove to fix and maintain contact limit between the first actuator module and the second actuator module.

5. The degassing device of claim 3 or 4, wherein in a state that the battery cell is positioned between the first actuator module and the second actuator module, and the first actuator module is moved to face the second actuator module by an operation of the driving shaft, when the heating block of the first actuator module and the heating block of the second actuator module respectively heat a front surface and a rear surface of the battery cell, the battery cell is heat-sealed by heat of each of the heating block, and the perforated portion of the battery cell is heat-sealed.

## Amended claims

### Amended claims in accordance with Rule 137(2) EPC.

1. A degassing device (100) for battery cell to remove gas generated inside the battery cell during charging up the battery cell through connection between the battery cell and a charging system to activate the battery cell, the degassing device (100) comprises:
a frame body (110) including a driving shaft (115) installed on a center of one side thereof to move straight, and fixed shaft (117) each of which is respectively arranged and fixed in a left side and a right side of the driving shaft (115);
a module fixed member (120) including a module actuator body (121) installed to be combined with the driving shaft (115) through a rack gear (115a) and a module fixed body (123) installed in such a way that a top side thereof is fixed to the fixed shaft (117) to guide the driving shaft (115) to move straight;
a first actuator module (130) mounted on and moving straight together with the module actuator body (121), and enabling the battery cell to discharge gas and a perforated portion to be sealed, and
a second actuator module (130A) mounted on the module fixed body (123) to face the first actuator module (130) and enabling the battery cell to discharge gas and the perforated portion to be sealed,
wherein the first actuator module (130) and the second actuator module (130A) are a pair of gas removal means that face each other,
wherein the pair of the first actuator module (130) and the second actuator module (130A) are plural, and a plurality of the pairs of the first actuator module (130) and the second actuator module (130A) are installed on the driving shaft (115) and the fixed shaft (117),
**characterized in that** each of the first actuator module (130) and the second actuator module (130A) includes:
a housing body (131) having a box shape and including a central through hole (131a) penetrating through a center of a front of the housing body (131) and auxiliary through hole (131a) penetrating through the front around a left portion and a right portion of the central through hole (131a);
a blade perforation body (132) installed at a center of the central through hole (131a) to perforate the battery cell;
a heating block (133) installed on an internal edge of the front of the housing body (131) to heat and seal a perforated portion of the battery cell, which is penetrated by the blade perforation body (132);
a main vacuum pad mounted on the front of the central through hole (131a) and formed to spread widely and attach to the battery cell when the battery cell is pressed;
sub-vacuum pad (135) respectively mounted on the front of the auxiliary through hole (131a), and formed to spread widely and support the battery cell when each of the first actuator module (130) and the second actuator module (130A) is attached to or detached from the battery cell;
a main gas suction unit (136) provided at a rear of the central through hole (131a) to suck gas, and
a side suction unit (137) provided on a left portion and a right portion of the main gas suction unit (136) at a rear of the auxiliary through hole (131a) to suck gas.

2. The degassing device (100) of claim 1, wherein a rack gear (115a) is formed to face an internal side of the drive shaft and a top side of the module fixed member (120), respectively, and the first actuator module (130) moves forward toward or backward from the second actuator module (130A) by the driving shaft (117) (115) that moves straight.

3. The degassing device (100) of claim 1, wherein the heating block (133) of the first actuator module (130) is formed to have a concave groove (133a) at a corner of a square edge of the first actuator module (130), and the heating block (133) of the second actuator module (130A) is formed to have a protrusion (133b) at a corner of a square edge of the second actuator module (130A),
wherein when the first actuator module (130) is in contact with the second actuator module (130A), the protrusion (133b) is inserted to the concave groove (133a) to fix and maintain contact limit between the first actuator module (130) and the second actuator module (130A).

4. The degassing device (100) of claim 1 or 3, wherein in a state that the battery cell is positioned between the first actuator module (130) and the second actuator module (130A), and the first actuator module (130) is moved to face the second actuator module (130A) by an operation of the driving shaft (115), when the heating block (133) of the first actuator module (130) and the heating block (133) of the second actuator module (130A) respectively heat a front surface and a rear surface of the battery cell, the battery cell is heat-sealed by heat of each of the heating block (133), and the perforated portion of the battery cell is heat-sealed.
